# EUROPEAN PATENT SPECIFICATION

(11) **EP 4 502 480 B1**
(45) Date of publication and mention of the grant of the patent: **17.12.2025**
(21) Application number: 24189252.0
(22) Date of filing: 17.07.2024
(51) Int. Cl.: F24F 11/00, F24F 11/58, F24F 11/61, F24F 11/63, F24F 110/10, F24F 110/12, F24F 110/20, F24F 110/22, F24F 110/50, F24F 110/52, F24F 110/62, F24F 110/64, F24F 110/66, F24F 110/68, F24F 110/70, F24F 110/72, F24F 120/10, F24F 130/10

(54) **SYSTEM AND METHOD FOR ENABLING SCHEDULED VENTILATION OF AN ENVIRONMENT**
SYSTEM UND VERFAHREN ZUR ERMÖGLICHUNG EINER GEPLANTEN BEATMUNG EINER UMGEBUNG
SYSTÈME ET PROCÉDÉ PERMETTANT UNE VENTILATION PROGRAMMÉE D'UN ENVIRONNEMENT

(30) Priority: 04.08.2023 US 202363517879 P
(43) Date of publication of application: 05.02.2025
(73) Proprietor: Carrier Corporation, Palm Beach Gardens, FL 33418 (US)
(72) Inventor: RASCHE, Christine, Indianapolis, 46231 (US); MCKINNEY, Peter, Palm Beach Gardens, 33418 (US); POWELL, Douglas, Indianapolis, 46204 (US); ATLURI, Sriram, 500081 Hyderabad (IN)
(74) Representative: Dehns

(56) References cited:
- EP-B1- 3 352 027
- CN-B- 108 302 735
- US-A1- 2017 307 243
- US-A1- 2019 264 940
- US-B2- 11 713 894

## Description

### BACKGROUND

This invention relates to the field of indoor air quality management systems, and more particularly, a system and method for enabling scheduled ventilation of an environment or area of interest. An exemplary background art system is known from patent document US 2017/307243 A1 which describes a system and a corresponding method for enabling scheduled ventilation of an area of interest, the system comprising a controller configured to receive first historical data associated with one or more of temperature, humidity, air quality, and occupancy within the area of interest.

### SUMMARY

According to a first aspect there is provided a system for enabling scheduled ventilation of an area of interest (AOI), the system comprising a controller comprising one or more processors coupled to a memory executable by the one or more processors, the controller configured to: receive first historical data associated with one or more of temperature, humidity, air quality, and occupancy within the AOI, receive second historical data associated with one or more of temperature, humidity, air quality, and weather attributes outside of the AOI, and determine a scheduled time and duration for ventilation of the AOI based on the received first historical data and the received second historical data.

Optionally, the controller is configured to receive first real-time data associated with one or more of the temperature, the humidity, the air quality, and the occupancy within the AOI, receive second real-time data associated with one or more of the temperature, the humidity, the air quality, and the weather attributes outside of the AOI, and determine the scheduled time and duration for ventilation of the AOI based on the received first and second real-time data and the received first and second historical data.

Optionally, the controller is configured to determine the scheduled time and duration for ventilation of the AOI based on the corresponding real-time data and/or the corresponding historical data of an area within a predefined radius around a geo-location of the AOI.

Optionally, the system comprises a thermostat positioned within the AOI, wherein the thermostat is operable to monitor one or more of the temperature, the humidity, and the air quality within the AOI.

Optionally, the system comprises one or more first sensors positioned within the AOI to monitor one or more of the temperature, the humidity, the air quality, and the occupancy within the AOI.

Optionally, the one or more first sensors comprise a temperature sensor, a humidity sensor, indoor air quality (IAQ) sensors, and an occupancy sensor.

Optionally, the controller is configured to receive the second historical data and the second real-time data from web services and/or one or more second sensors positioned outside the AOI, wherein the one or more second sensors comprise a temperature sensor, a humidity sensor, and outdoor air quality (OAQ) sensors.

Optionally, the IAQ sensors and the OAQ sensors comprise one or more of a volatile organic compound sensor, a carbon dioxide sensor, a particulate matter sensor, a smoke detector, a pollen detector, a carbon monoxide sensor, an ethylene sensor, a formaldehyde sensor, a radon sensor, a methane sensor, an ozone sensor, a sulfur dioxide sensor, a nitric oxide, and a nitrous oxide sensor.

Optionally, the controller is configured to transmit the determined scheduled time and duration for ventilation to the thermostat associated with the AOI, wherein the thermostat enables ventilation of the AOI at the scheduled time for the scheduled duration.

Optionally, the controller or the thermostat is configured to operate an air handling unit associated with the AOI to enable ventilation of the AOI at the scheduled time for the scheduled duration.

Optionally, the controller or the thermostat is configured to operate an air ventilator associated with the AOI to enable ventilation of the AOI at the scheduled time for the scheduled duration.

Optionally, the controller or the thermostat is configured to operate a blower fan associated with the AOI to enable ventilation of the AOI at the scheduled time for the scheduled duration.

Optionally, the controller or the thermostat is configured to generate and transmit a first set of signals to one or more mobile devices associated with one or more occupants of AOI, wherein the first set of signals is indicative of the determined scheduled time and duration and an alert for enabling manual ventilation of the AOI at the scheduled time for the scheduled duration.

According to a second aspect there is provided a method for enabling scheduled ventilation of an area of interest (AOI), the method comprising the steps of: receiving, by a controller, first historical data associated with one or more of temperature, humidity, air quality, and occupancy within the AOI; receiving, by the controller, second historical data associated with one or more of temperature, humidity, air quality, and weather attributes outside of the AOI; and determining, by the controller, a scheduled time and duration for ventilation of the AOI based on the received first historical data and the received second historical data.

Optionally, the method comprises the steps of receiving, by the controller, first real-time data associated with one or more of the temperature, the humidity, the air quality, and the occupancy within the AOI, receiving, by the controller, second real-time data associated with one or more of the temperature, the humidity, the air quality, and the weather attributes outside of the AOI, wherein the second historical data and the second real-time data are received from web services and/or one or more sensors positioned outside the AOI, wherein the one or more second sensors comprise a temperature sensor, a humidity sensor, and outdoor air quality (OAQ) sensors, and determining, by the controller, the scheduled time and duration for ventilation of the AOI based on the received first and second real-time data and the received first and second historical data.

Optionally, the method comprises the step of determining the scheduled time and duration for ventilation of the AOI based on the corresponding real-time data and/or the corresponding historical data of an area within a predefined radius around a geo-location of the AO.

Optionally, the method comprises the steps of transmitting, by the controller, the determined scheduled time and duration for ventilation to a thermostat associated with the AOI, wherein the thermostat enables ventilation of the AOI at the scheduled time for the scheduled duration.

Optionally, the method comprises the steps of operating an air handling unit or a blower fan associated with the AOI to enable ventilation of the AOI at the scheduled time for the scheduled duration.

Optionally, the method comprises the steps of operating an air ventilator associated with the AOI to enable ventilation of the AOI at the scheduled time for the scheduled duration.

Optionally, the method comprises the steps of generating and transmitting, by the controller, a first set of signals to one or more mobile devices associated with one or more occupants of AOI, wherein the first set of signals is indicative of the determined scheduled time and duration and an alert for enabling manual ventilation of the AOI at the scheduled time for the scheduled duration.

The foregoing summary is illustrative only and is not intended to be in any way limiting. In addition to the illustrative aspects, embodiments, and features described above, further aspects, embodiments, features, and techniques of the present invention will become more apparent from the following description taken in conjunction with the drawings.

### BRIEF DESCRIPTION OF THE DRAWINGS

The accompanying drawings are included to provide a further understanding of the present invention and are incorporated in and constitute a part of this specification. The drawings illustrate exemplary embodiments of the present invention and, together with the description, serve to explain the principles of the present invention.

In the drawings, similar components and/or features may have the same reference label. Further, various components of the same type may be distinguished by following the reference label with a second label that distinguishes among the similar components. If only the first reference label is used in the specification, the description is applicable to any one of the similar components having the same first reference label irrespective of the second reference label.
FIG. 1 illustrates an exemplary representation of a system for controlling and enabling scheduled ventilation of an environment.
FIG. 2 illustrates an exemplary block diagram of the system of FIG. 1.
FIG. 3 illustrates an exemplary flow diagram of a method for enabling scheduled ventilation of an environment.
FIG. 4 illustrates an exemplary schematic block diagram of a hardware system used for implementing the controller of FIGs 1 to 3, respectively.

### DETAILED DESCRIPTION

A detailed description of one or more embodiments of the disclosed system and method are presented herein by way of exemplification and not limitation with reference to the Figures.

Various terms are used herein. To the extent a term used in a claim is not defined below, it should be given the broadest definition persons in the pertinent art have given that term as reflected in printed publications and issued patents at the time of filing.

In the specification, reference may be made to the spatial relationships between various components and to the spatial orientation of various aspects of components as the devices are depicted in the attached drawings. However, as will be recognized by those skilled in the art after a complete reading, the components of this invention. described herein may be positioned in any desired orientation. Thus, the use of terms such as "above," "below," "upper," "lower," "first", "second" or other like terms to describe a spatial relationship between various components or to describe the spatial orientation of aspects of such components should be understood to describe a relative relationship between the components or a spatial orientation of aspects of such components, respectively, described herein may be oriented in any desired direction.

In an environment such as but not limited to a building having one or more floors and rooms, a duct-based heating, ventilation, and air conditioning (HVAC) system may be installed for supplying conditioned and fresh air to different areas of interest (AOI) such as the zones or rooms of the building. The HVAC system may include a supply air stream duct having a plurality of interconnected supply air channels through which the supply air flows to the zones, and a return air duct having a plurality of interconnected return air channels through which the return air from each zone recirculates or ventilated. The HVAC system may further involve an air handling unit (AHU) or blower fans connected to the supply air stream duct and the return air stream duct to receive fresh outside air, condition the outside air, supply the conditioned fresh air throughout the ducts across different zones in a timely manner and further receive return air from the different zones to control and enable ventilation of the AOI. Moreover, each of the zones or AOI may include an air ventilator that may control the ventilation of the zones or AOI of the building.

The indoor air quality (IAQ) at the zones may be negatively affected because of increased levels of carbon monoxide (CO), carbon dioxide (CO₂), volatile organic compounds (VOCs), particulates, bacteria, and the like present in the zones or the environment. Existing IAQ control solutions may involve multiple IAQ sensors to monitor the IAQ values of the zone. Accordingly, based on the IAQ values of the zones, outside air may be supplied into the zones to maintain good IAQ at the zones. However, the existing solution may not be energy efficient as outside air may need to be cooled and conditioned before supplying into the zones. In addition, the outside air may be of poor quality which may result in bad IAQ. For instance, the outside air quality may be affected by weather conditions, smoke, wildfire, pollen, traffic and industrial pollution, and the like. Thus, simply bringing air from outside may not be an effective or efficient solution to enable ventilation of the zones, as it may lead to contamination of the AOI/zones.

This invention provides a simple, efficient, and cost-effective system and method that may be easily configured with the existing HVAC system and IAQ control system of any environment, to determine an optimum time for enabling scheduled ventilation of the AOI/zones based on real-time and historical indoor and outdoor air quality patterns and further enable ventilation of the AOI at the scheduled optimum time.

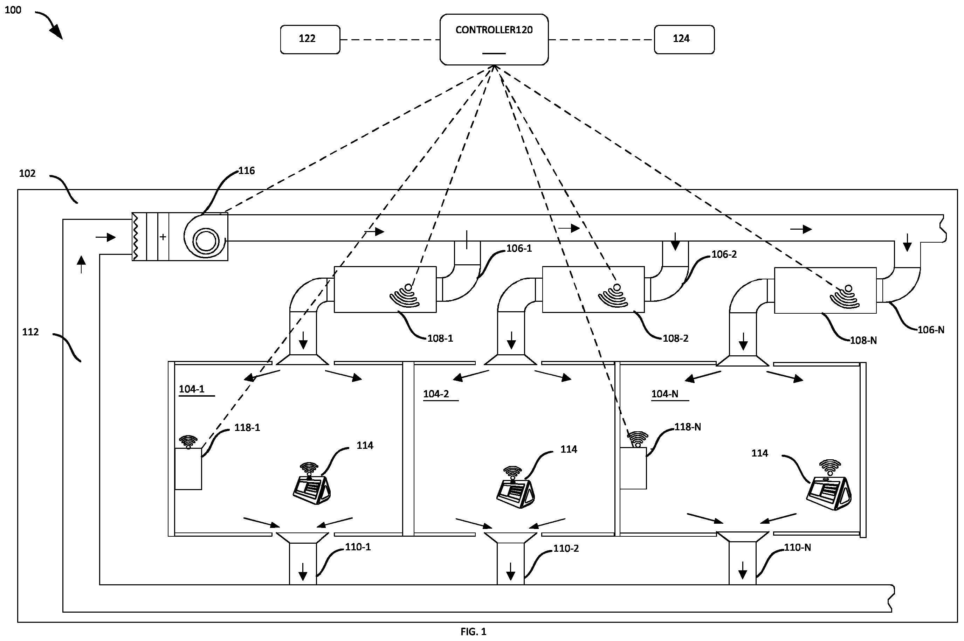

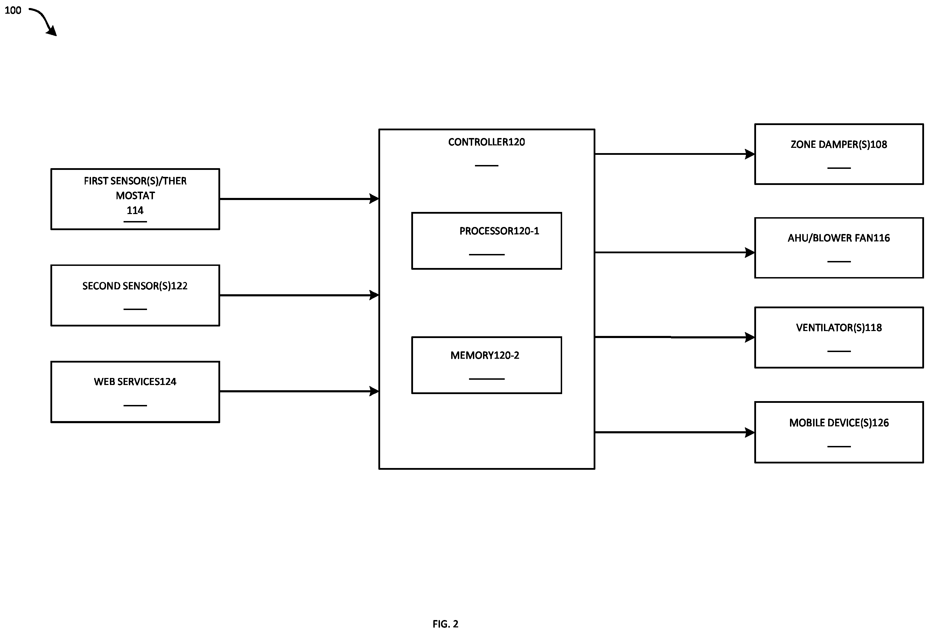

Referring to FIGs. 1 and 2, a system 100 configured with an HVAC system of an environment 102 or an area of interest (AOI) is disclosed, which determines an optimum time for enabling scheduled ventilation of the AOI or environment based on real-time and historical indoor and outdoor air quality patterns and further enable ventilation of the AOI at the scheduled optimum time to maintain good IAQ. In one or more embodiments, the environment 102 (also referred to as an area of interest (AOI) 102, herein) may be a multi-zone environment that may include a plurality of zones 104-1 to 104-N (collectively referred to as zones 104, herein). The system 100 may involve the existing components of the HVAC system of the AOI.

The HVAC system of the environment/AOI 102 may include a supply air stream duct comprising a plurality of interconnected supply air channels 106-1 to 106-N (collectively designated as supply air channels 106, herein) fluidically connected to the zones 104-1 to 104-N of the AOI 102. Further, one or more zone dampers 108-1 to 108-2 may be configured in the supply air channels 106-1 to 106-N such that one of the zone dampers 108-1 to 108-N may be configured in each of the supply air channels 106-1 to 106-N for individually regulating the flow of supply air into each of the zones 104-1 to 104-N. The HVAC system may further include a return air duct comprising a plurality of interconnected return air channels 110-1 to 110-N (collectively referred to as return air channels 110, herein) to facilitate the outflow of return air from each of the zones 104. The outlet of each of the return air channels 110-1 to 110-N may be connected to a common return air duct 112, such that the common return air duct 112 may collectively receive return air from each of the zones 104-1 to 104-N. The return air channels 110 may be fluidically configured between the zones 104-1 to 104-N and the common return air duct 112, such that one of the return air channels 110-1 to 110-N may be fluidically configured between one of the zones 104-1 to 104-N and the common return air duct 112 for individually supplying/regulating the return air from each of the zones 104-1 to 104-N into the common return air duct 112.

The system 100 may include one or more first sensors 114 comprising a temperature sensor, a humidity sensor, indoor air quality (IAQ) sensors, and an occupancy sensor one or more of the temperature, the humidity, the air quality, and the occupancy within the AOI or zones 104. In one or more embodiments, the first sensors 114 may be a single sensing device such as a thermostat (also designated as 114, herein) that may be positioned in each of the zones or AOI 102. However, in some embodiments, the first sensors 114 may be distributed within the AOI 102 or zones 104 and may be in further communication with the thermostat 114 of the zones or AOI 102.

In one or more embodiments, the HVAC system of the AOI 102 may further include an air handling unit (AHU) 116 fluidically connected to the supply air stream duct/supply air channels 106 and the common return air duct 112 to facilitate the flow of the supply air from the supply air channels 106 to the common air 112 duct via the one or more zones 104 and the respective return air channels 110. In other embodiments, the HVAC system of the environment 102 may include at least one blower fan (also designated as 116, herein) fluidically connected to the supply air stream duct and the common return air duct 112 to facilitate the flow of the supply air from the supply air channels 106 to the common return air duct 112 via the one or more zones 104 and the respective return air channels 110.

The HVAC system may include a central damper (not shown) configured to regulate the flow of supply air comprising any or a mixture of outside air and the return air into the supply airstream duct/supply air channel 106. Further, the system 100 may include the plurality of zone dampers 108 which may be installed in the interconnected supply air channels 106 such that one of the zone dampers 108 may be configured in each of the supply air channels 106 for individually regulating the flow of supply air into each of the zones. For instance, as shown, the zone damper 108-1 may be configured in the supply air channel 106-1. Further, the zone damper 108-2 may be configured in the supply air channel 106-N. Similarly, the N-number of zone dampers 108-N may be configured in the N-number of supply air channels 106-N. The zone damper 108 may be configured to be operated in a closed state, a semi-closed state, or an open state. In the closed state, the zone damper 108 may completely restrict the flow of air through the respective supply air channel 106 and into the respective zone 104. Further, in the open state, the zone damper 108 may allow an unrestricted flow of air through the respective supply air channel 106 and into the respective zone 104. Furthermore, in the semi-closed state or semi-open state, the zone damper 108 may allow a reduced flow of air through the respective supply air channel 106 and into the respective zone 104.

In one or more embodiments, the HVAC system may further include an air ventilator 118-1 to 118-N (collectively designated as ventilator 118, herein) configured in at least one of the zones 104-1 to 104-N. The ventilator 118 may be operable to ventilate the air from the respective zone 104. Further, when no ventilator is present in any of the zones 104, the ventilation in such zones 104 may be manually done by opening the doors and windows of the respective zones 104. It would be obvious for a person skilled in the art that while FIG. 1 illustrates the zones 104-1, and 104-N having ventilators 118-1 and 118-N and the zone 104-2 not having the ventilator, however, all the zones 104 may also include the ventilator 118 depending on the AOI or at least some of the zones 104 may include the ventilator 118 without any limitation. Moreover, the number of zone dampers 108, air ventilators 118, and first sensors or thermostats 114 may vary based on the number of zones 104 of the environment 102.

The system 100 may include a controller 120 communicatively connected to the AHU/blower fan 116, the zone dampers 108, the first sensors or thermostat 114, the air ventilators 118, and other components of the HVAC system to control the operation of the HVAC system or ventilation of the AOI 102. The controller 120 may include a processor 120-1 coupled to a memory 120-2 storing instructions executable by the processor 120-1 to enable the controller 120 to perform one or more designated operations. In one or more embodiments, the controller 120 may be a central server, however, the controller 120 may also be the thermostat 114 or a control unit of the HVAC system or air quality control system of the same AOI 102.

The system 100 may further include one or more mobile devices 126 associated with occupants of the zones 104. The mobile devices 126 may be in communication with the controller and may allow the occupants to monitor the IAQ of the zones 104 and further set predefined IAQ values for the respective zones 104.

The controller 120 may be configured to receive first historical data and first real-time data associated with one or more of temperature, humidity, air quality, and occupancy within the AOI. The first sensors 114 may monitor and store the real-time data for a predefined duration to generate the corresponding first historical data. The system 100 can be configured to collect the (first) real-time data in a database and correspondingly keep generating the (first) historical data for future operations and further collecting and storing new (first) data to update the (first) historical data in the database. Further, the controller 120 may be configured to receive second historical data and second real-time data associated with one or more of temperature, humidity, air quality, and weather attributes outside of the AOI. Accordingly, based on the received first and second real-time data and the received first and second historical data, the controller may determine an optimum schedule time and duration for ventilation of the AOI or zones.

In an example, but not limited to the like, the optimum time (for ventilation) to bring fresh outside air into the space of the zones or AOI may be morning time as pollution outside of the AOI is generally less. In addition, as the temperature of outside air is generally low during the morning, bringing cool outside air into the space may lower the load on the HVAC system to cool the space, thereby making the cooling operation cost-effective and energy-efficient. In another example, but not limited to the like, when the system 100 determines that the occupants of the AOI may arrive at 5:00 PM in the evening based on historically analyzed data and the requirement of outside fresh air within the AOI may be around 7:30 PM as per the IAQ sensor's historical and real-time data, the system may determine/identify the optimum time for ventilation of the AOI to be 6:30 PM and accordingly enable the inflow of outside fresh air within the AOI by 6.30 PM as outside air quality may generally be bad around 5:00 PM because of traffic pollution and outside construction activity.

In an example, the weather data (historical, real-time, and future forecasts) collected from web services 124 may enable the system 100 to predict the operation of the HVAC system (filtration, humidity, ventilation) in advance before the outdoor environment changes. The system 100 may automatically shut down the ventilation of the AOI in the event of high smoke conditions or pollen buildup outside of the AOI, thereby preventing contamination of the AOI or zones. The system 100 may further minimize ventilation of the AOI during high-ozone events. Further, the system 100 may accordingly control the energy recovery operation, heat recovery operation, or direct/bypass of the air during the ventilation of the AOI based on the outdoor temperature/humidity conditions.

In one or more embodiments, the controller 120 may be configured to receive the second real-time and historical data from one or more second sensors 122 positioned outside the AOI and/or from web services 124. The second sensors 122 may comprise a temperature sensor, a humidity sensor, and outdoor air quality (OAQ) sensors. In one or more embodiments, the IAQ sensors and OAQ sensors may include but are not limited to one or more of a volatile organic compound sensor, a carbon dioxide sensor, a smoke detector, a pollen detector, a particulate matter sensor, a carbon monoxide sensor, an ethylene sensor, a formaldehyde sensor, a radon sensor, a methane sensor, an ozone sensor, a sulfur dioxide sensor, a nitric oxide, and a nitrous oxide sensor.

In one or more embodiments, the controller 120 may be configured to determine the scheduled time and duration for ventilation of the AOI 102 based on the corresponding real-time data and/or the corresponding historical data of an area within a predefined radius around a geo-location of the AOI 102. This may enable the controller 120 to process minimal data to determine the optimum ventilation time and duration for the AOI, thereby making the overall ventilation operation efficient and effective.

In one or more embodiments, the controller 120 may be configured to transmit the determined scheduled time and duration for ventilation to the thermostat 114 associated with the AOI 102 or a control unit associated with the HVAC system of the AOI 102. Accordingly, the thermostat or the control unit may enable ventilation of the AOI at the scheduled time for the scheduled duration.

In one or more embodiments, the controller 120 or the thermostat 114 may be configured to actuate the AHU or blower fan 116 associated with the AOI 102 to enable ventilation of the AOI 102 at the scheduled time for the scheduled duration. Further, in one or more embodiments, the controller 120 or the thermostat 114 may be configured to actuate the air ventilator 118 associated with the AOI 102 to enable ventilation of the AOI at the scheduled time for the scheduled duration. Furthermore, in other embodiments, the controller 120 may be configured to generate and transmit a first set of signals to the mobile devices 126 associated with the occupants of the zones 104 and/or to the thermostat 114 provided in the zones 104. The first signals may be indicative of the determined scheduled time and duration for ventilation of the respective zone and a request to the corresponding occupant to manually ventilate the respective zone 104 by opening the doors and windows of the zone 104.

In one or more embodiments, the controller 120 may operate the zone dampers 108 in any of the open state, a semi-closed state, the closed state and further operate the AHU or blower fan 116 at a predefined capacity based on the determined scheduled time and duration, and to enable or control the ventilation of the respective zone or the AOI 102. In one or more embodiments, the controller 120 may operate the air ventilator 118 of the zone at a predefined capacity based on the determined scheduled time and duration, and to enable or control the ventilation of the respective zone or the AOI 102.

In one or more embodiments, when the ventilation of the AOI 102 or any zone 104 is to be enabled at the scheduled time and duration, the controller 120 may operate the zone damper 108 of the respective zone in an open state, such that the supply air flows into the zone 104 having the respective zone damper and the corresponding return air from the respective zone flows into the common return air duct 112. For instance, the controller 120 may operate the zone damper 108-1 in an open state, such that the supply air may flow into the zone 104-1 and the corresponding return air from the zone 104-1 may flow into the common return air duct 112 to enable ventilation of the zone 104-1. Further, the controller 120 may operate the zone damper 108-2 in a closed state, such that the flow of outside air into the zone 104-2 may be restricted. Similarly, the controller 120 may individually operate the zone dampers 108-3 to 108-N in the open state or closed state to achieve ventilation of the zones at the scheduled time and restrict ventilation of the zones at other non-scheduled times.

The controller 120, the AHU/blower fan 116, the zone dampers 108, the first sensors 114, the second sensors 122, the mobile devices 126, and the air ventilators 118 may include a transceiver or a communication module to communicatively connect the controller 120 to one or more of the AHU/blower fan 116, the zone dampers 108, the first sensors 114, the second sensors 122, the mobile devices 126, the web services 124, and the air ventilators 118, through a network via wired and/or wireless media. In one or more embodiments, the controller 120 may be a control unit associated with the HVAC system of the AOI 102. However, in other embodiments, the controller 120 may be a central server that may be in communication with the control unit of the HVAC system. In one or more embodiments, the system 100 or controller 120, and the mobile devices 126 associated with the occupants may be operatively coupled to a website and so be operable from any Internet-enabled user device. Examples of mobile devices 126 may include but are not limited to, a portable computer, a personal digital assistant, a handheld device, and a workstation.

In one implementation, the network can be a wireless network, a wired network or a combination thereof. Network can be implemented as one of the different types of networks, such as intranet, local area network (LAN), wide area network (WAN), LoRaWAN, the internet, and the like. Further, the network may either be a dedicated network or a shared network. The shared network represents an association of the different types of networks that use a variety of protocols, for example, Hypertext Transfer Protocol (HTTP), Transmission Control Protocol/Internet Protocol (TCP/IP), Wireless Application Protocol (WAP), and the like, to communicate with one another. Further, network can include a variety of network devices, including transceivers, routers, bridges, servers, computing devices, storage devices, and the like. In another implementation the network can be a cellular network or mobile communication network based on various technologies, including but not limited to, Global System for Mobile (GSM), General Packet Radio Service (GPRS), Code Division Multiple Access (CDMA), Long Term Evolution (LTE), WiMAX, 5G or 6G network protocols, and the like.

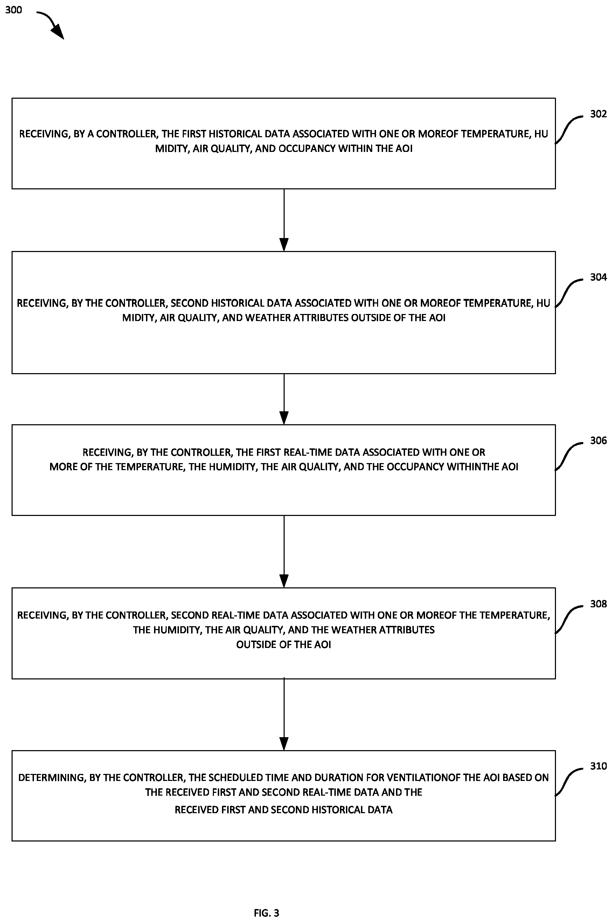

Referring to FIG. 3, method 300 for detecting low indoor air quality (IAQ) and enabling ventilation in zones of a multi-zone environment is disclosed. Method 300 may involve the controller 120, the AHU/ blower fan 116, the ventilator 118, the mobile devices 126, the first sensors or thermostat 114, the second sensors 122, and other components associated with the system 100 of FIGs. 1 and 2. Method 300 may include step 302 of receiving, by a controller, the first historical data associated with one or more of temperature, humidity, air quality, and occupancy within the AOI. Method 300 may further include step 304 of receiving, by the controller, second historical data associated with one or more of temperature, humidity, air quality, and weather attributes outside of the AOI.

Further, method 300 may include step 306 of receiving, by the controller, the first real-time data associated with one or more of the temperature, the humidity, the air quality, and the occupancy within the AOI. Method 300 may further include step 308 of receiving, by the controller, second real-time data associated with one or more of the temperature, the humidity, the air quality, and the weather attributes outside of the AOI. The second historical data and the second real-time data may be received from web services and/or one or more sensors positioned outside the AOI. Accordingly, method 300 may include step 310 of determining, by the controller, the scheduled time and duration for ventilation of the AOI based on the received first and second real-time data and the received first and second historical data.

In one or more embodiments, method 300 may include the step of determining the scheduled time and duration for ventilation of the AOI based on the corresponding real-time data and/or the corresponding historical data of an area within a predefined radius around a geo-location of the AOI.

In one or more embodiments, method 300 may include the step of transmitting, by the controller, the determined scheduled time and duration for ventilation to a thermostat associated with the AOI. The thermostat may further enable ventilation of the AOI at the scheduled time for the scheduled duration.

In one or more embodiments, method 300 may include the steps of actuating or operating a ventilator associated with the zones or AOI to enable ventilation of the zone or AOI at the scheduled time for the scheduled duration. Further, in other embodiments method 300 may include the step of actuating or operating the blower fan or the AHU to enable the flow of ambient air into the zone having the low IAQ condition to facilitate the AOI at the scheduled time for the scheduled duration.

Furthermore, in one or more embodiments, method 300 may include the step of generating and transmitting, by the controller, a first set of signals to the mobile devices associated with the occupants of the zones to be ventilated. The first signals may be indicative of the determined scheduled time and duration for ventilation and a request to the corresponding occupant to manually ventilate the respective zone by opening doors and windows of the zone at the scheduled time for the scheduled duration.

Those skilled in the art would appreciate that the system and method are using the existing blower fan, AHU, ventilator, thermostat, zone dampers, and duct system which are already installed in the AOI without any additional hardware elements, which keeps the system simple, cost-effective, and sustainable. Moreover, the system and method, further make the system cost-effective, sustainable, and easy to control. Further, the system may alert the occupants and also enable ventilation in the low IAQ zones even when no air ventilator is present in the zones.

Thus, the invention provides a simple, efficient, and cost-effective system and method that may be easily configured with the existing HVAC system and IAQ control system of any multi-zone environment, to determine an optimum time for enabling scheduled ventilation of the AOI/zones based on real-time and historical indoor and outdoor air quality patterns and further enable ventilation of the AOI at the scheduled optimum time. Moreover, as the invention considers outside air quality, weather data, and air attributes (temperature, humidity) before supplying the outside air within the AOI for ventilation, this may make the invention energy efficient as the outside air may already be clean and conditioned before being supplied into the zones or AOI. In addition, the invention may be implemented in zones having no air ventilation system and may alert occupants in the event of low IAQ detection.

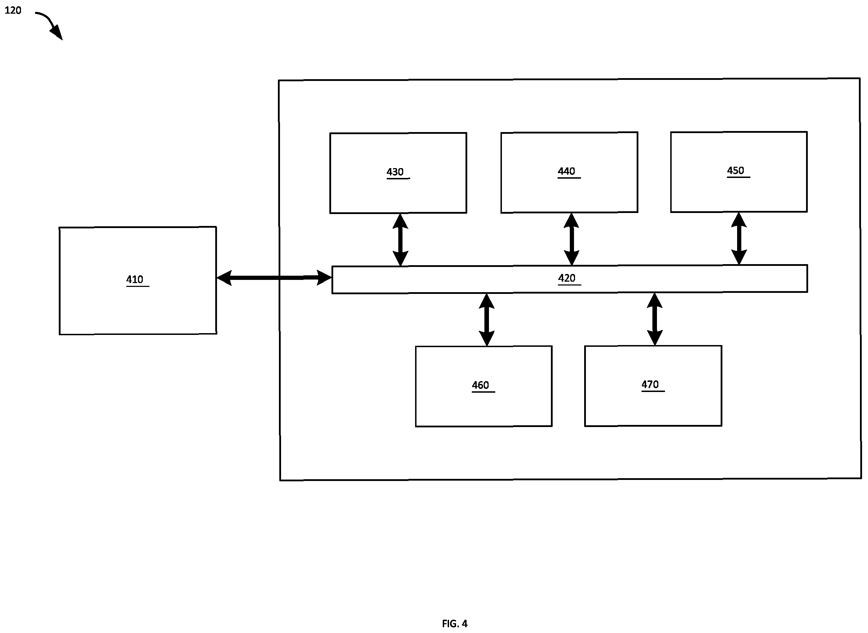

FIG. 4 is an exemplary schematic block diagram of a hardware system used for implementing the controller 120. As shown in FIG. 4, the controller 120 can include an external storage device 410, a bus 420, a main memory 430, a read only memory 440, a mass storage device 450, communication port 460, and a processor 470. A person skilled in the art will appreciate that the controller 120 may include more than one processor and communication ports. Examples of processor 470 include, but are not limited to, an Intel^{®} Itanium^{®} or Itanium 2 processor(s), or AMD^{®} Opteron^{®} or Athlon MP^{®} processor(s), Motorola^{®} lines of processors, FortiSOC^{™} system on chip processors or other future processors. Processor 470 may include various modules. Communication port 460 can be any of an RS-232 port for use with a modem-based dialup connection, a 10/100 Ethernet port, a Gigabit or 10 Gigabit port using copper or fibre, a serial port, a parallel port, or other existing or future ports. Communication port 460 may be chosen depending on a network, such a Local Area Network (LAN), Wide Area Network (WAN), or any network to which controller 120 connects. Memory 430 can be Random Access Memory (RAM), or any other dynamic storage device commonly known in the art. Read-only memory 440 can be any static storage device(s) e.g., but not limited to, a Programmable Read Only Memory (PROM) chips for storing static information e.g., start-up or BIOS instructions for processor 470. Mass storage 450 may be any current or future mass storage solution, which can be used to store information and/or instructions. Exemplary mass storage solutions include, but are not limited to, Parallel Advanced Technology Attachment (PATA) or Serial Advanced Technology Attachment (SATA) hard disk drives or solid-state drives (internal or external, e.g., having Universal Serial Bus (USB) and/or Firewire interfaces), e.g. those available from Seagate (e.g., the Seagate Barracuda 7102 family) or Hitachi (e.g., the Hitachi Deskstar 7K1000), one or more optical discs, Redundant Array of Independent Disks (RAID) storage, e.g. an array of disks (e.g., SATAarrays), available from various vendors including Dot Hill Systems Corp., LaCie, Nexsan Technologies, Inc. and Enhance Technology, Inc.

Bus 420 communicatively couples processor(s) 470 with the other memory, storage, and communication blocks. Bus 420 can be, e.g., a Peripheral Component Interconnect (PCI) / PCI Extended (PCI-X) bus, Small Computer System Interface (SCSI), USB or the like, for connecting expansion cards, drives and other subsystems as well as other buses, such a front side bus (FSB), which connects processor 470 to software system.

Optionally, operator and administrative interfaces, e.g., a display, keyboard, and a cursor control device, may also be coupled to bus 420 to support direct operator interaction with controller 120. Other operator and administrative interfaces can be provided through network connections connected through communication port 460. The external storage device 410 can be any kind of external hard-drives, floppy drives, IOMEGA^{®} Zip Drives, Compact Disc - Read Only Memory (CD-ROM), Compact Disc-Re-Writable (CD-RW), Digital Video Disk-Read Only Memory (DVD-ROM). Components described above are meant only to exemplify various possibilities. In no way should the aforementioned exemplary controller 120 limit the scope of the present invention.

While the present invention has been described with reference to exemplary embodiments, it will be understood by those skilled in the art that various changes may be made without departing from the scope of the present invention as defined by the appended claims. Therefore, it is intended that the present invention not be limited to the particular embodiment disclosed, but that the present invention includes all embodiments falling within the scope of the appended claims.

In interpreting the specification, all terms should be interpreted in the broadest possible manner consistent with the context. In particular, the terms "comprises" and "comprising" should be interpreted as referring to elements, components, or steps in a non-exclusive manner, indicating that the referenced elements, components, or steps may be present, or utilized, or combined with other elements, components, or steps that are not expressly referenced. Where the specification claims refer to at least one of something selected from the group consisting of A, B, C ....and N, the text should be interpreted as requiring only one element from the group, not A plus N, or B plus N, etc.

## Claims

1. A system (100) for enabling scheduled ventilation of an area of interest, AOI (102), the system comprising:
a controller (120) comprising one or more processors (120-1) coupled to a memory (120-2) executable by the one or more processors, the controller configured to:
receive first historical data associated with one or more of temperature, humidity, air quality, and occupancy within the AOI (102);
the system (100) being **characterised in that** the controller is further configured to: receive second historical data associated with one or more of temperature, humidity, air quality, and weather attributes outside of the AOI (102); and
determine a scheduled time and duration for ventilation of the AOI (102) based on the received first historical data and the received second historical data.

2. The system of claim 1, wherein the controller (120) is configured to:
receive first real-time data associated with one or more of the temperature, the humidity, the air quality, and the occupancy within the AOI (102);
receive second real-time data associated with one or more of the temperature, the humidity, the air quality, and the weather attributes outside of the AOI (102); and
determine the scheduled time and duration for ventilation of the AOI (102) based on the received first and second real-time data and the received first and second historical data.

3. The system of claim 1 or claim 2, wherein the controller (120) is configured to determine the scheduled time and duration for ventilation of the AOI (102) based on the corresponding real-time data and/or the corresponding historical data of an area within a predefined radius around a geo-location of the AOI (102).

4. The system of any one of claims 1 to 3, wherein the system (100) comprises a thermostat (114) positioned within the AOI (102), wherein the thermostat (114) is operable to monitor one or more of the temperature, the humidity, and the air quality within the AOI (102).

5. The system of any one of claims 1 to 4, wherein the system (100) comprises one or more first sensors (114) positioned within the AOI (102) to monitor one or more of the temperature, the humidity, the air quality, and the occupancy within the AOI (102).

6. The system of claim 5, wherein the one or more first sensors (114) comprise a temperature sensor, a humidity sensor, an occupancy sensor, and indoor air quality, IAQ, sensors;
optionally wherein the IAQ sensors comprise one or more of a volatile organic compound sensor, a carbon dioxide sensor, a particulate matter sensor, a smoke detector, a pollen detector, a carbon monoxide sensor, an ethylene sensor, a formaldehyde sensor, a radon sensor, a methane sensor, an ozone sensor, a sulfur dioxide sensor, a nitric oxide, and a nitrous oxide sensor.

7. The system of any one of claims 1 to 6, wherein the controller (120) is configured to receive the second historical data and the second real-time data from web services (124);
and/or
wherein the controller (120) is configured to receive the second historical data and the second real-time data from one or more second sensors (122) positioned outside the AOI (102), wherein the one or more second sensors (122) comprise a temperature sensor, a humidity sensor, and outdoor air quality, OAQ, sensors;
optionally wherein the OAQ sensors comprise one or more of a volatile organic compound sensor, a carbon dioxide sensor, a particulate matter sensor, a smoke detector, a pollen detector, a carbon monoxide sensor, an ethylene sensor, a formaldehyde sensor, a radon sensor, a methane sensor, an ozone sensor, a sulfur dioxide sensor, a nitric oxide, and a nitrous oxide sensor.

8. The system of any one of claims 1 to 7, wherein the controller (120) is configured to transmit the determined scheduled time and duration for ventilation to the thermostat (114) associated with the AOI (102), wherein the thermostat (114) enables ventilation of the AOI (102) at the scheduled time for the scheduled duration.

9. The system of any one of claims 1 to 8, wherein the controller (120) or the thermostat (114) is configured to operate:
an air handling unit (116) or a blower fan (116) associated with the AOI (102) to enable ventilation of the AOI at the scheduled time for the scheduled duration; and/or
an air ventilator (118) associated with the AOI (102) to enable ventilation of the AOI at the scheduled time for the scheduled duration.

10. The system of any one of claims 1 to 9, wherein the controller (120) or the thermostat (114) is configured to generate and transmit a first set of signals to one or more mobile devices (126) associated with one or more occupants of AOI (102), wherein the first set of signals is indicative of the determined scheduled time and duration and an alert for enabling manual ventilation of the AOI (102) at the scheduled time for the scheduled duration.

11. A method (300) for enabling scheduled ventilation of an area of interest, AOI (102), the method comprising the steps of:
receiving (302), by a controller (120), first historical data associated with one or more of temperature, humidity, air quality, and occupancy within the AOI (102);
the method (300) being **characterised by** further comprising the steps of:
receiving (304), by the controller (120), second historical data associated with one or more of temperature, humidity, air quality, and weather attributes outside of the AOI (102); and
determining (310), by the controller (120), a scheduled time and duration for ventilation of the AOI (102) based on the received first historical data and the received second historical data.

12. The method of claim 11, wherein the method comprises the steps of:
receiving (306), by the controller (120), first real-time data associated with one or more of the temperature, the humidity, the air quality, and the occupancy within the AOI (102);
receiving (308), by the controller (120), second real-time data associated with one or more of the temperature, the humidity, the air quality, and the weather attributes outside of the AOI (102),
wherein the second historical data and the second real-time data are received from web services (124) and/or one or more sensors (122) positioned outside the AOI (102), wherein the one or more sensors comprise a temperature sensor, a humidity sensor, and outdoor air quality, OAQ, sensors; and
determining (310), by the controller (120), the scheduled time and duration for ventilation of the AOI (102) based on the received first and second real-time data and the received first and second historical data.

13. The method of claim 11 or claim 12, wherein the method comprises the step of determining the scheduled time and duration for ventilation of the AOI (102) based on the corresponding real-time data and/or the corresponding historical data of an area within a predefined radius around a geo-location of the AOI (102).

14. The method of any one of claims 11 to 13, wherein the method comprises the steps of:
transmitting, by the controller (120), the determined scheduled time and duration for ventilation to a thermostat (114) associated with the AOI (102), wherein the thermostat enables ventilation of the AOI (102) at the scheduled time for the scheduled duration; and/or
generating and transmitting, by the controller (120), a first set of signals to one or more mobile devices (126) associated with one or more occupants of the AOI (102), wherein the first set of signals is indicative of the determined scheduled time and duration and an alert for enabling manual ventilation of the AOI (102) at the scheduled time for the scheduled duration.

15. The method of any one of claims 11 to 14, wherein the method comprises the steps of:
operating an air handling unit (116) or a blower fan (116) associated with the AOI (102) to enable ventilation of the AOI at the scheduled time for the scheduled duration; and/or
operating an air ventilator (118) associated with the AOI (102) to enable ventilation of the AOI at the scheduled time for the scheduled duration.

## Patentansprüche

1. System (100) zur Ermöglichung einer geplanten Beatmung eines Interessenbereichs (Area Of Interest), AOI (102), das System umfassend:
eine Steuerung (120), umfassend einen oder mehrere Prozessoren (120-1), die mit einem Speicher (120-2) gekoppelt sind, der von dem einen oder den mehreren Prozessoren ausführbar ist, wobei die Steuerung zum Folgenden konfiguriert ist:
Empfangen erster historischer Daten, die mit einer oder mehreren Temperatur, Feuchtigkeit, Luftqualität und Belegung innerhalb des AOI (102) in Verbindung stehen;
wobei das System (100) **dadurch gekennzeichnet ist, dass** die Steuerung ferner zum Folgenden konfiguriert ist: Empfangen zweiter historischer Daten, die mit einer oder mehreren Temperatur, Feuchtigkeit, Luftqualität und Wetterattributen außerhalb des AOI (102) in Verbindung stehen; und
Bestimmen einer geplanten Zeit und Dauer für die Beatmung des AOI (102) auf der Grundlage der empfangenen ersten historischen Daten und der empfangenen zweiten historischen Daten.

2. System nach Anspruch 1, wobei die Steuerung (120) konfiguriert ist, um:
erste Echtzeitdaten zu empfangen, die mit einer oder mehreren der Temperatur, der Feuchtigkeit, der Luftqualität und der Belegung innerhalb des AOI (102) in Verbindung stehen;
zweite Echtzeitdaten zu empfangen, die mit einer oder mehreren der Temperatur, der Feuchtigkeit, der Luftqualität und den Wetterattributen außerhalb des AOI (102) in Verbindung stehen; und
die geplante Zeit und Dauer für die Beatmung des AOI (102) auf der Grundlage der empfangenen ersten und zweiten Echtzeitdaten und der empfangenen ersten und zweiten historischen Daten zu bestimmen.

3. System nach Anspruch 1 oder Anspruch 2, wobei die Steuerung (120) konfiguriert ist, um die geplante Zeit und Dauer für die Beatmung des AOI (102) auf der Grundlage der entsprechenden Echtzeitdaten und/oder der entsprechenden historischen Daten eines Bereichs innerhalb eines vordefinierten Radius um einen geografischen Standort des AOI (102) zu bestimmen.

4. System nach einem der Ansprüche 1 bis 3, wobei das System (100) einen Thermostat (114) umfasst, der innerhalb des AOI (102) positioniert ist, wobei der Thermostat (114) betreibbar ist, um eine oder mehrere der Temperatur, der Feuchtigkeit und der Luftqualität innerhalb des AOI (102) zu überwachen.

5. System nach einem der Ansprüche 1 bis 4, wobei das System (100) einen oder mehrere erste Sensoren (114) umfasst, die innerhalb des AOI (102) positioniert sind, um eine oder mehrere der Temperatur, der Feuchtigkeit, der Luftqualität und der Belegung innerhalb des AOI (102) zu überwachen.

6. System nach Anspruch 5, wobei der eine oder die mehreren ersten Sensoren (114) einen Temperatursensor, einen Feuchtigkeitssensor, einen Belegungssensor und Raumluftqualitätssensoren, IAQ-Sensoren, umfassen;
gegebenenfalls wobei die IAQ-Sensoren einen oder mehrere Sensoren für flüchtige organische Verbindungen, einen Kohlendioxidsensor, einen Feinstaubsensor, einen Rauchdetektor, einen Pollendetektor, einen Kohlenmonoxidsensor, einen Ethylensensor, einen Formaldehydsensor, einen Radonsensor, einen Methansensor, einen Ozonsensor, einen Schwefeldioxidsensor, einen Stickstoffmonoxidsensor und einen Distickstoffoxidsensor umfassen.

7. System nach einem der Ansprüche 1 bis 6, wobei die Steuerung (120) konfiguriert ist, um die zweiten historischen Daten und die zweiten Echtzeitdaten von Webdiensten (124) zu empfangen; und/oder
wobei die Steuerung (120) konfiguriert ist, um die zweiten historischen Daten und die zweiten Echtzeitdaten von einem oder mehreren zweiten Sensoren (122) zu empfangen, die außerhalb des AOI (102) positioniert sind, wobei der eine oder die mehreren zweiten Sensoren (122) einen Temperatursensor, einen Feuchtigkeitssensor und Außenluftqualitätssensoren (Outdoor Air Quality), OAQ, umfassen;
gegebenenfalls wobei die OAQ-Sensoren einen oder mehrere Sensoren für flüchtige organische Verbindungen, einen Kohlendioxidsensor, einen Feinstaubsensor, einen Rauchdetektor, einen Pollendetektor, einen Kohlenmonoxidsensor, einen Ethylensensor, einen Formaldehydsensor, einen Radonsensor, einen Methansensor, einen Ozonsensor, einen Schwefeldioxidsensor, einen Stickstoffmonoxidsensor und einen Distickstoffoxidsensor umfassen.

8. System nach einem der Ansprüche 1 bis 7, wobei die Steuerung (120) konfiguriert ist, um die festgelegte geplante Zeit und Dauer für die Beatmung an den Thermostat (114) zu übertragen, der mit dem AOI (102) in Verbindung steht, wobei der Thermostat (114) die Beatmung des AOI (102) zur geplanten Zeit für die geplante Dauer ermöglicht.

9. System nach einem der Ansprüche 1 bis 8, wobei die Steuerung (120) oder der Thermostat (114) konfiguriert ist, um Folgendes zu betreiben:
ein Lüftungsgerät (116) oder ein Gebläse (116), das mit dem AOI (102) in Verbindung steht, um die Beatmung des AOI zur geplanten Zeit für die geplante Dauer zu ermöglichen; und/oder
einen Luftventilator (118), der mit dem AOI (102) in Verbindung steht, um die Beatmung des AOI zur geplanten Zeit für die geplante Dauer zu ermöglichen.

10. System nach einem der Ansprüche 1 bis 9, wobei die Steuerung (120) oder der Thermostat (114) konfiguriert ist, um einen ersten Satz von Signalen zu erzeugen und an eine oder mehrere mobile Vorrichtungen (126) zu übertragen, die mit einem oder mehreren Insassen des AOI (102) in Verbindung stehen, wobei der erste Satz von Signalen die festgelegte geplante Zeit und Dauer sowie eine Warnung anzeigt, die eine manuelle Beatmung des AOI (102) zur geplanten Zeit für die geplante Dauer ermöglicht.

11. Verfahren (300) zur Ermöglichung einer geplanten Beatmung eines Interessenbereichs, AOI (102), das Verfahren umfassend die folgenden Schritte:
Empfangen (302) durch eine Steuerung (120) erster historischer Daten, die mit einer oder mehreren Temperatur, Feuchtigkeit, Luftqualität und Belegung innerhalb des AOI (102) in Verbindung stehen;
wobei das Verfahren (300) **dadurch gekennzeichnet** ist, ferner umfassend die folgenden Schritte:
Empfangen (304) durch die Steuerung (120) zweiter historischer Daten, die mit einer oder mehreren Temperatur, Feuchtigkeit, Luftqualität und Wetterattributen außerhalb des AOI (102) in Verbindung stehen; und
Bestimmen (310) durch die Steuerung (120) einer geplanten Zeit und Dauer für die Beatmung des AOI (102) auf der Grundlage der empfangenen ersten historischen Daten und der empfangenen zweiten historischen Daten.

12. Verfahren nach Anspruch 11, wobei das Verfahren die folgenden Schritte umfasst:
Empfangen (306) durch die Steuerung (120) erster Echtzeitdaten, die mit einer oder mehreren der Temperatur, der Feuchtigkeit, der Luftqualität und der Belegung innerhalb des AOI (102) in Verbindung stehen;
Empfangen (308) durch die Steuerung (120) von zweiten Echtzeitdaten, die mit einer oder mehreren der Temperatur, der Feuchtigkeit, der Luftqualität und den Wetterattributen außerhalb des AOI (102) in Verbindung stehen,
wobei die zweiten historischen Daten und die zweiten Echtzeitdaten von Webdiensten (124) und/oder einem oder mehreren Sensoren (122) empfangen werden, die außerhalb des AOI (102) positioniert sind, wobei der eine oder die mehreren Sensoren einen Temperatursensor, einen Feuchtigkeitssensor und Außenluftqualitätssensoren, OAQ, umfassen; und
Bestimmen (310) durch die Steuerung (120) der geplanten Zeit und Dauer für die Beatmung des AOI (102) auf der Grundlage der empfangenen ersten und zweiten Echtzeitdaten und der empfangenen ersten und zweiten historischen Daten.

13. Verfahren nach Anspruch 11 oder Anspruch 12, wobei das Verfahren den Schritt umfasst, die geplante Zeit und Dauer für die Beatmung des AOI (102) auf der Grundlage der entsprechenden Echtzeitdaten und/oder der entsprechenden historischen Daten eines Bereichs innerhalb eines vordefinierten Radius um einen geografischen Standort des AOI (102) zu bestimmen.

14. Verfahren nach einem der Ansprüche 11 bis 13, wobei das Verfahren die folgenden Schritte umfasst:
Übertragen durch die Steuerung (120) der festgelegten geplanten Zeit und Dauer für die Beatmung an einen Thermostat (114), der mit dem AOI (102) in Verbindung steht, wobei der Thermostat die Beatmung des AOI (102) zur geplanten Zeit für die geplante Dauer ermöglicht; und/oder
Erzeugen und Übertragen durch die Steuerung (120) eines ersten Satzes von Signalen an eine oder mehrere mobile Vorrichtungen (126), die mit einem oder mehreren Insassen des AOI (102) in Verbindung stehen, wobei der erste Satz von Signalen die festgelegte geplante Zeit und Dauer sowie eine Warnung anzeigt, die eine manuelle Beatmung des AOI (102) zur geplanten Zeit für die geplante Dauer ermöglicht.

15. Verfahren nach einem der Ansprüche 11 bis 14, wobei das Verfahren die folgenden Schritte umfasst:
Betreiben eines Lüftungsgeräts (116) oder eines Gebläses (116), die mit dem AOI (102) in Verbindung stehen, um die Beatmung des AOI zur geplanten Zeit für die geplante Dauer zu ermöglichen; und/oder
Betreiben eines Luftventilators (118), der mit dem AOI (102) in Verbindung steht, um die Beatmung des AOI zur geplanten Zeit für die geplante Dauer zu ermöglichen.

## Revendications

1. Système (100) permettant une ventilation programmée d'une zone d'intérêt, AOI (102), le système comprenant :
un dispositif de commande (120) comprenant un ou plusieurs processeurs (120-1) couplés à une mémoire (120-2) exécutable par le ou les processeurs, le dispositif de commande étant configuré pour :
recevoir les premières données historiques associées à un ou plusieurs éléments parmi la température, l'humidité, la qualité de l'air et l'occupation au sein de l'AOI (102) ;
le système (100) étant **caractérisé en ce que** le dispositif de commande est en outre configuré pour : recevoir des secondes données historiques associées à un ou plusieurs éléments parmi la température, l'humidité, la qualité de l'air et la météo en dehors de l'AOI (102) ; et
déterminer une heure et une durée programmées pour la ventilation de l'AOI (102) sur la base des premières données historiques reçues et des secondes données historiques reçues.

2. Système selon la revendication 1, dans lequel le dispositif de commande (120) est configuré pour :
recevoir les premières données en temps réel associées à un ou plusieurs éléments parmi la température, l'humidité, la qualité de l'air et l'occupation au sein de l'AOI (102) ;
recevoir les secondes données en temps réel associées à un ou plusieurs éléments parmi la température, l'humidité, la qualité de l'air et la météo en dehors de l'AOI (102) ; et
déterminer l'heure et la durée programmées pour la ventilation de l'AOI (102) sur la base des premières et secondes données en temps réel reçues ainsi que des premières et secondes données historiques reçues.

3. Système selon la revendication 1 ou la revendication 2, dans lequel le dispositif de commande (120) est configuré pour déterminer l'heure et la durée programmées pour la ventilation de l'AOI (102) sur la base des données en temps réel correspondantes et/ou des données historiques correspondantes d'une zone dans un rayon prédéfini autour d'une géolocalisation de l'AOI (102).

4. Système selon l'une quelconque des revendications 1 à 3, dans lequel le système (100) comprend un thermostat (114) positionné à l'intérieur de l'AOI (102), dans lequel le thermostat (114) sert à surveiller un ou plusieurs éléments parmi la température, l'humidité et la qualité de l'air au sein de l'AOI (102).

5. Système selon l'une quelconque des revendications 1 à 4, dans lequel le système (100) comprend un ou plusieurs premiers capteurs (114) positionnés à l'intérieur de l'AOI (102) pour surveiller un ou plusieurs éléments parmi la température, l'humidité, la qualité de l'air et l'occupation au sein de l'AOI (102).

6. Système selon la revendication 5, dans lequel le ou les premiers capteurs (114) comprennent un capteur de température, un capteur d'humidité, un capteur d'occupation et des capteurs de la qualité de l'air intérieur, QAI ;
dans lequel éventuellement les capteurs de QAI comprennent un ou plusieurs capteurs parmi un capteur de composés organiques volatils, un capteur de dioxyde de carbone, un capteur de matières particulaires, un détecteur de fumée, un détecteur de pollen, un capteur de monoxyde de carbone, un capteur d'éthylène, un capteur de formaldéhyde, un capteur de radon, un capteur de méthane, un capteur d'ozone, un capteur de dioxyde de soufre, un capteur d'oxyde nitrique et un capteur d'oxyde nitreux.

7. Système selon l'une quelconque des revendications 1 à 6, dans lequel le dispositif de commande (120) est configuré pour recevoir les secondes données historiques et les secondes données en temps réel en provenance des services Web (124) ; et/ou
dans lequel le dispositif de commande (120) est configuré pour recevoir les secondes données historiques et les secondes données en temps réel en provenance d'un ou plusieurs seconds capteurs (122) positionnés en dehors de l'AOI (102), dans lequel le ou les seconds capteurs (122) comprennent un capteur de température, un capteur d'humidité et des capteurs de qualité de l'air extérieur, QAE ;
dans lequel éventuellement les capteurs de QAE comprennent un ou plusieurs capteurs parmi un capteur de composés organiques volatils, un capteur de dioxyde de carbone, un capteur de matières particulaires, un détecteur de fumée, un détecteur de pollen, un capteur de monoxyde de carbone, un capteur d'éthylène, un capteur de formaldéhyde, un capteur de radon, un capteur de méthane, un capteur d'ozone, un capteur de dioxyde de soufre, un capteur d'oxyde nitrique et un capteur d'oxyde nitreux.

8. Système selon l'une quelconque des revendications 1 à 7, dans lequel le dispositif de commande (120) est configuré pour transmettre l'heure et la durée programmées déterminées pour la ventilation au thermostat (114) associé à l'AOI (102), dans lequel le thermostat (114) permet la ventilation de l'AOI (102) à l'heure programmée pendant la durée programmée.

9. Système selon l'une quelconque des revendications 1 à 8, dans lequel le dispositif de commande (120) ou le thermostat (114) est configuré pour faire fonctionner :
une unité de traitement d'air (116) ou un ventilateur soufflant (116) associé à l'AOI (102) pour permettre la ventilation de l'AOI à l'heure programmée pendant la durée programmée ; et/ou
un ventilateur d'air (118) associé à l'AOI (102) pour permettre la ventilation de l'AOI à l'heure programmée pendant la durée programmée.

10. Système selon l'une quelconque des revendications 1 à 9, dans lequel le dispositif de commande (120) ou le thermostat (114) est configuré pour générer et transmettre un premier ensemble de signaux à un ou plusieurs dispositifs (126) associés à un ou plusieurs occupants de l'AOI (102), dans lequel le premier ensemble de signaux indique l'heure et la durée programmées déterminées ainsi qu'une alerte pour permettre une ventilation manuelle de l'AOI (102) à l'heure programmée pendant la durée programmée.

11. Procédé (300) permettant une ventilation programmée d'une zone d'intérêt, AOI (102), le procédé comprenant les étapes consistant à :
recevoir (302), au moyen d'un dispositif de commande (120), les premières données historiques associées à un ou plusieurs éléments parmi la température, l'humidité, la qualité de l'air et l'occupation au sein de l'AOI (102) ;
le procédé (300) étant **caractérisé en ce qu'**il comprend en outre les étapes consistant à :
recevoir (304), au moyen du dispositif de commande (120), les secondes données historiques associées à un ou plusieurs éléments parmi la température, l'humidité, la qualité de l'air et la météo en dehors de l'AOI (102) ; et
déterminer (310), au moyen du dispositif de commande (120), une heure et une durée programmées pour la ventilation de l'AOI (102) sur la base des premières données historiques reçues et des secondes données historiques reçues.

12. Procédé selon la revendication 11, dans lequel le procédé comprend les étapes consistant à :
recevoir (306), au moyen du dispositif de commande (120), les premières données en temps réel associées à un ou plusieurs éléments parmi la température, l'humidité, la qualité de l'air et l'occupation au sein de l'AOI (102) ;
recevoir (308), au moyen du dispositif de commande (120), les secondes données en temps réel associées à un ou plusieurs éléments parmi la température, l'humidité, la qualité de l'air et la météo en dehors de l'AOI (102),
dans lequel les secondes données historiques et les secondes données en temps réel sont reçues en provenance des services Web (124) et/ou d'un ou plusieurs capteurs (122) positionnés en dehors de l'AOI (102), dans lequel le ou les capteurs comprennent un capteur de température, un capteur d'humidité et des capteurs de qualité de l'air extérieur, QAE ; et
déterminer (310), au moyen du dispositif de commande (120), l'heure et la durée programmées pour la ventilation de l'AOI (102) sur la base des premières et secondes données en temps réel reçues ainsi que des premières et secondes données historiques reçues.

13. Procédé selon la revendication 11 ou la revendication 12, dans lequel le procédé comprend l'étape consistant à déterminer l'heure et la durée programmées pour la ventilation de l'AOI (102) sur la base des données en temps réel correspondantes et/ou des données historiques correspondantes d'une zone dans un rayon prédéfini autour d'une géolocalisation de l'AOI (102).

14. Procédé selon l'une quelconque des revendications 11 à 13, dans lequel le procédé comprend les étapes consistant à :
transmettre, au moyen du dispositif de commande (120), l'heure et la durée programmées déterminées pour la ventilation à un thermostat (114) associé à l'AOI (102), dans lequel le thermostat permet la ventilation de l'AOI (102) à l'heure programmée pendant la durée programmée ; et/ou
générer et transmettre, au moyen du dispositif de commande (120), un premier ensemble de signaux à un ou plusieurs dispositifs (126) associés à un ou plusieurs occupants de l'AOI (102), dans lequel le premier ensemble de signaux indique l'heure et la durée programmées déterminées ainsi qu'une alerte pour permettre une ventilation manuelle de l'AOI (102) à l'heure programmée pendant la durée programmée.

15. Procédé selon l'une quelconque des revendications 11 à 14, dans lequel le procédé comprend les étapes consistant à :
faire fonctionner une unité de traitement d'air (116) ou un ventilateur soufflant (116) associé à l'AOI (102) pour permettre la ventilation de l'AOI à l'heure programmée pendant la durée programmée ; et/ou
faire fonctionner un ventilateur d'air (118) associé à l'AOI (102) pour permettre la ventilation de l'AOI à l'heure programmée pendant la durée programmée.
